(19) Europäisches Patentamt / European Patent Office / Office européen des brevets

(11) **EP 4 167 179 A1**

(12) **EUROPEAN PATENT APPLICATION**
published in accordance with Art. 153(4) EPC

(43) Date of publication:
**19.04.2023 Bulletin 2023/16**

(21) Application number: **20940142.1**

(22) Date of filing: **11.06.2020**

(51) International Patent Classification (IPC):
**G06T 7/00** $^{(2017.01)}$

(52) Cooperative Patent Classification (CPC):
**G06T 7/00**

(86) International application number:
**PCT/JP2020/023056**

(87) International publication number:
**WO 2021/250858 (16.12.2021 Gazette 2021/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **FUKUDA, Mitsuaki**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **AUTHENTICATION METHOD, AUTHENTICATION PROGRAM, AND INFORMATION PROCESSING DEVICE**

(57) An authentication method in which a computer executes processing for extracting a feature amount of each of a plurality of feature points of a living body from imaged data of the living body, calculating a similarity between the feature amount of each of the plurality of extracted feature points and a feature amount stored in a storage unit in association with a feature point that corresponds to each of the plurality of feature points, and referring to the storage unit that stores weight information that indicates a weight to be applied to a similarity in association with the similarity, acquiring the weight information associated with the calculated similarity, and executing authentication processing on the living body based on a similarity that is newly generated by applying the acquired weight information to the calculated similarity.

FIG. 14A

FEATURE POINT SCORE DISTRIBUTION OF ANOTHER PERSON PAIR

FEATURE POINT SCORE DISTRIBUTION OF INDIVIDUAL PAIR

APPEARANCE FREQUENCY

FEATURE POINT SCORE

**(Cont. next page)**

EP 4 167 179 A1

FIG. 14B

**Description**

FIELD

The present case relates to an authentication method, an authentication program, and an information processing device.

BACKGROUND

In recent years, a technique for authenticating individuals using biometric information such as fingerprints or vein patterns has been disclosed. In order to improve authentication accuracy, a method has been disclosed for specifying lines of the palm from a captured image or the like and reducing a weight of authentication for a portion where the lines of the palm exist (for example, refer to Patent Document 1).

SUMMARY

TECHNICAL PROBLEM

However, a computational load increases to specify the lines of the palm. Therefore, specification accuracy deteriorates if an attempt is made to specify the lines of the palm with a small computational load, and authentication accuracy also deteriorates as a result.

In one aspect, an object of the present invention is to provide an authentication method, an authentication program, an information processing device that can improve authentication accuracy.

SOLUTION TO PROBLEM

In one aspect, an authentication method in which a computer executes processing for extracting a feature amount of each of a plurality of feature points of a living body from imaged data of the living body, calculating a similarity between the feature amount of each of the plurality of extracted feature points and a feature amount stored in a storage unit in association with a feature point that corresponds to each of the plurality of feature points, referring to the storage unit that stores weight information that indicates a weight to be applied to a similarity in association with the similarity, acquiring the weight information associated with the calculated similarity, and executing authentication processing on the living body based on a similarity that is newly generated by applying the acquired weight information to the calculated similarity.

ADVANTAGEOUS EFFECTS OF INVENTION

It is possible to improve authentication accuracy.

BRIEF DESCRIPTION OF DRAWINGS

FIG. 1 is a diagram illustrating feature points.
FIG. 2 is a diagram illustrating permanent features.
FIG. 3 is a diagram illustrating permanent features.
FIG. 4 is a diagram illustrating permanent features.
FIG. 5 is a diagram illustrating permanent features.
FIG. 6 is a diagram illustrating appearance frequencies of feature point scores.
FIGs. 7A and 7B are diagrams illustrating feature point score distributions of an individual pair in a case of being affected by the permanent features.
FIGs. 8A and 8B are diagrams illustrating feature point score distributions of another person pair in a case of being affected by the permanent features.
FIG. 9 is a diagram illustrating an overlap between the feature point score distribution of the individual pair and the feature point score distribution of the another person pair.
FIG. 10 is a diagram illustrating an overlap between the feature point score distribution of the individual pair and the feature point score distribution of the another person pair.
FIG. 11 is a block diagram illustrating an entire configuration of an information processing device.

FIG. 12 is a flowchart illustrating an example of biometric registration processing.
FIG. 13 is a flowchart illustrating an example of biometric authentication processing.
FIG. 14 (i.e., FIGs. 14A and 14B) is a diagram illustrating a weighting coefficient w (s$_i$).
FIG. 15 is a diagram illustrating a procedure for determining a weighting coefficient.
FIG. 16 is a diagram illustrating a hardware configuration.

DESCRIPTION OF EMBODIMENTS

In modern society, identity verification is required in various situations. As one method for accurately performing identity verification, biometric authentication technology using some features of a human body such as a fingerprint pattern, a vein pattern, or a face image has been widely used in recent years.

For example, when capturing an image of a near-infrared wavelength region by irradiating a palm with near infrared rays, it is possible to capture an image in which veins under the skin of the palm is blackly imaged. From this image, pattern information of the veins flowing in the palm like a mesh can be extracted. The vein pattern information is different for everyone. Therefore, by calculating a similarity between a vein pattern acquired by a sensor in various scenes where personal authentication is required and registration data that is recorded in a database, an IC card, or the like in advance, the similarity can be used for applications such as identity verification. The biometric authentication technology has been already widely used in, for example, permitting or not permitting access to various services such as determining whether or not to permit to enter a restricted area where only authorized persons can enter, determining whether or not to allow log-in to a personal computer, or confirming a user in online transactions.

In biometric authentication, biometric information of a user is acquired using a sensor such as a camera, collation data is generated by converting the acquired biometric information into a biometric feature amount that can be collated, and the collation data is collated with registration data. For example, in a biometric authentication method using feature points, a plurality of feature points suitable for biometric authentication is selected from an image of a living body portion acquired by a sensor or the like, a biometric feature amount for each selected feature point is extracted, and the biometric feature amounts for each feature point are collated so as to perform identity verification.

A similarity score is (hereinafter, this is referred to as feature point score) is obtained by collating corresponding biometric feature amounts for each feature point between the collation data and the registration data, and in addition, the feature point scores of the plurality of feature points are integrated. Hereinafter, the integrated feature point score is referred to as a total collation score. By determining whether or not the total collation score is larger than a predetermined identity determination threshold, identity verification can be performed.

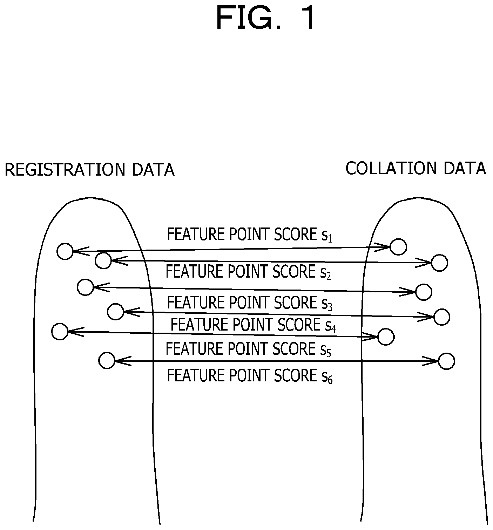

FIG. 1 is a diagram illustrating feature points. In the example in FIG. 1, attention is focused on a feature point appearing in the fingerprint. For the fingerprints, a biometric feature amount at a feature point such as a branching point (branching direction, the number of branches, or the like) can be used. As illustrated in FIG. 1, a similarity score (feature point score) of the biometric feature amount between each feature point in the registration data and each corresponding feature point in the collation data generated at the time of collation is calculated.

The total collation score is obtained according to the following formula (1), for example, as assuming a feature point score obtained by collating each of N feature points as s$_i$. The N feature points extracted from the registered biometric image and the N feature points extracted from the collated biometric image are associated with each other, a feature point score s_i is calculated for each associated feature point pair, and an average of the feature point score of each feature point pair is obtained as the total collation score. Since fluctuation of the similarity varies for each feature point, the total collation score using the average of the feature point scores of the plurality of feature points is calculated, and this is used for identity determination. This stabilizes an identity determination result.

[Expression 1]

$$\text{Total collation score} = \frac{\sum_{i=1}^{N}(s_i)}{N}$$

In order to accurately perform identity determination through biometric authentication, it is ideal that the biometric feature amount of each feature point is a unique value for an individual. Normally, since a slight fluctuation occurs each time when a biosensor acquires biometric information in biometric authentication, it is not always possible to obtain exactly the same biometric feature amount even for the person oneself. However, if the biometric feature amount of each feature point is the unique value for the individual, even if the value slightly fluctuates, the feature point score increases since the biometric feature amount is similar in a case of the person oneself, and the feature point score decreases since the biometric feature amount is not similar in a case of another person.

However, "a feature (hereinafter, referred to as permanent feature) detected commonly from biometric information acquired by a biosensor regardless of whether the person is the person oneself or another person" may be included in the collation data. In this case, due to an effect of the permanent feature, there is a case where the biometric feature amount of the collation data is similar to a biometric feature amount of registration data of another person and the feature point score increases.

In a traditional method for identifying a person oneself according to the total collation score in which the feature point scores of the feature points are integrated, the effect of the permanent feature affects the total collation score. In this case, a total collation score of the collation data and the registration data of the another person increases, and an authentication error probability for erroneously determining the another person as the person oneself increases, and there is a possibility that authentication accuracy deteriorates. In order to improve the accuracy of biometric authentication, at the time of identity determination, it is desirable to reduce the effect of the permanent feature and suppress the authentication accuracy deterioration.

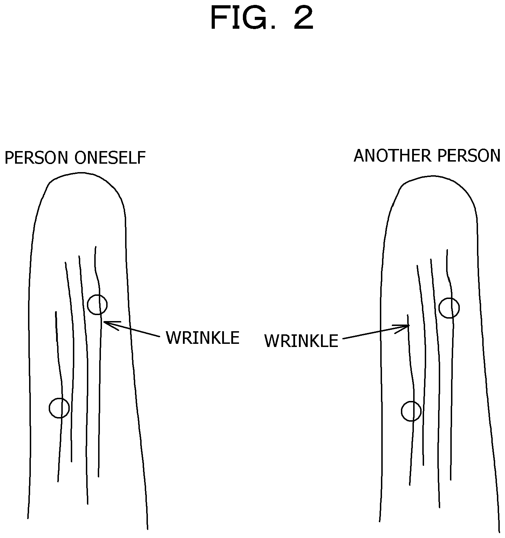

An example of the permanent features common to many people including the person oneself and the other persons, includes features that many people have in common, for example, wrinkles on the living body surface or the like. For example, as illustrated in FIG. 2, in a case where wrinkles are detected with the biosensor, there is a case where the wrinkles of the person oneself and the another person are similar to each other. In this case, a feature point score of a feature point near the detected wrinkle becomes higher regardless of whether the person is the person oneself or the another person.

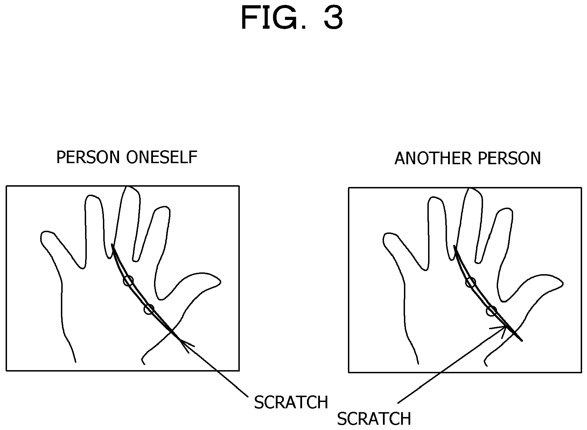

Other examples of the permanent feature include scratches, dirt, or the like of the biosensor. As illustrated in FIG. 3, in a case where the sensor has scratches or dirt, there is a case where an appearance of a portion of the scratch or dirt resembles regardless of whether the person is the person oneself or the another person. In this case, there is a case where a feature point score of a feature point near the detected scratch or dirt becomes higher regardless of whether the person is the person oneself or the another person.

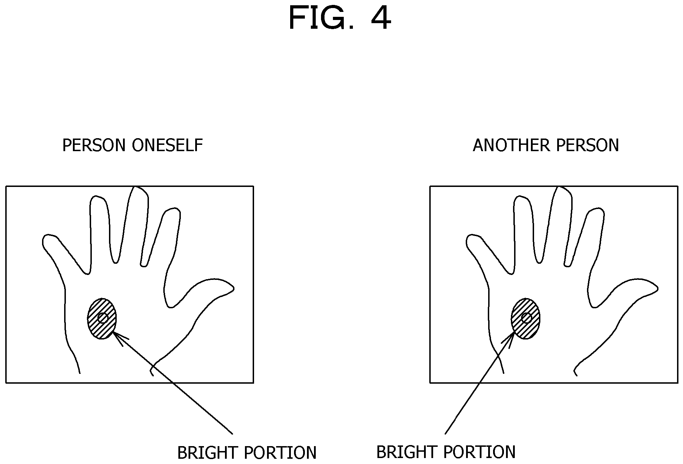

Other examples of the permanent feature include a feature caused by an environmental effect such as lighting reflections. As illustrated in FIG. 4, in a case where a specific portion is always brightly imaged due to the lighting reflections or the like, an appearance of the brightly imaged portion may resemble regardless of whether or not the person is the person oneself or the another person. In this case, there is a case where a feature point score of a feature point in the brightly appeared portion becomes higher regardless of whether the person is the person oneself or the another person.

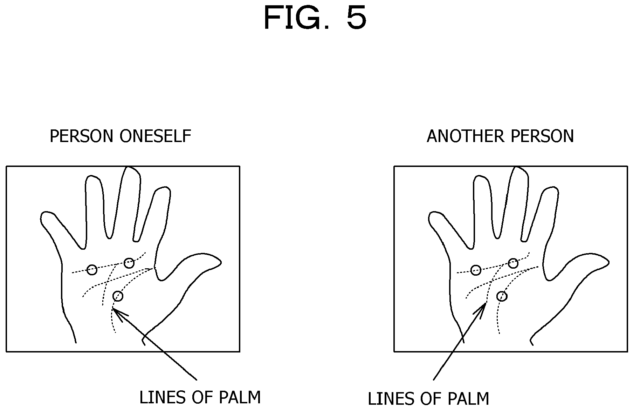

Other examples of the permanent feature include lines of the palm (lifeline or the like). Since the lines of the palm may differ for each individual, it is considered to use the lines of the palm as a biometric feature. However, since the lines of the palms of different persons may resemble each other, the palmistry is not necessarily suitable for biometric authentication. As illustrated in FIG. 5, there is a case where the lines of the palms of different persons resemble each other. In this case, there is a case a feature point score of a feature point near the line of the palm increases regardless of whether or not the person is the person oneself or the another person.

Therefore, a method is considered for extracting and specifying the permanent feature such as the lines of the palm from a captured image for each time of identity verification and reducing a weight of authentication for a portion where the permanent feature exists, in order to improve the authentication accuracy. However, to specify the permanent feature for each time of identity verification increases a computational load. Therefore, when an attempt is made to specify the permanent feature with a small computational load, specification accuracy deteriorates, and as a result, the authentication accuracy also deteriorates.

Therefore, in the following embodiment, an information processing device, an authentication method, and an authentication program that can improve authentication accuracy while suppressing a computational load will be described.

[First Embodiment]

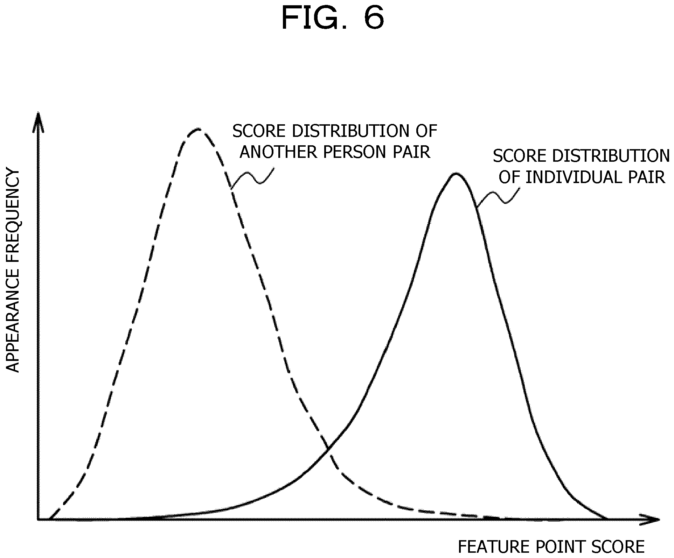

First, a graph of an appearance frequency of a feature point score obtained by collating corresponding feature points in registration data and collation data in a case where an effect of a permanent feature is small is as illustrated in FIG. 6. A score distribution of an individual pair is a frequency distribution of the feature point score when the collation data is collated with registration data of a person oneself. A score distribution of another person pair is a frequency distribution of the feature point score when the collation data is collated with registration data of another person.

As illustrated in FIG. 6, the frequency distribution of the feature point score of the individual pair is mostly distributed in a range where the feature point score is large. The frequency distribution of the feature point score of the another person pair is mostly distributed in a range where the feature point score is small. Although the frequency distribution of the feature point score of the individual pair partially overlap the frequency distribution of the feature point score of the another person pair, an appearance frequency of the feature point score of the another person pair is low in the overlapping portion. As a result, a separation degree between the frequency distribution of the feature point score of the individual pair and the frequency distribution of the feature point score of the another person pair is high. Due to these characteristics, a total collation score using an average of a plurality of feature point scores is large for the individual pair and is small for the another person pair. Therefore, it is possible to distinguish the person oneself or the another person by recognizing whether the total collation score is large or small.

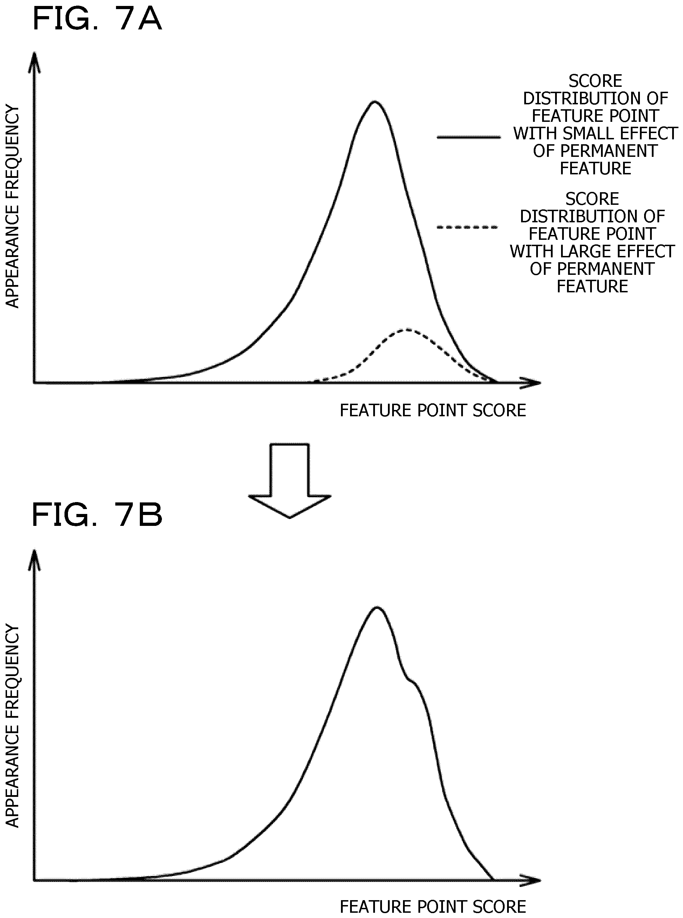

On the other hand, a feature point score in a case where the effect of the permanent feature is large will be described below. First, a feature point score distribution of the individual pair will be described. As illustrated in FIG. 7A, a score distribution of a feature point with a small effect of the permanent feature is a distribution as in FIG. 6. The total number of the feature points with a large effect of the permanent feature is small. However, since the permanent feature is imaged in a similar manner each time when a biosensor acquires biometric information, a feature point score obtained by collating the feature points with the large effect of the permanent feature is larger than usual. According to the above, the feature point score of the individual pair has a frequency distribution as in FIG. 7B in total.

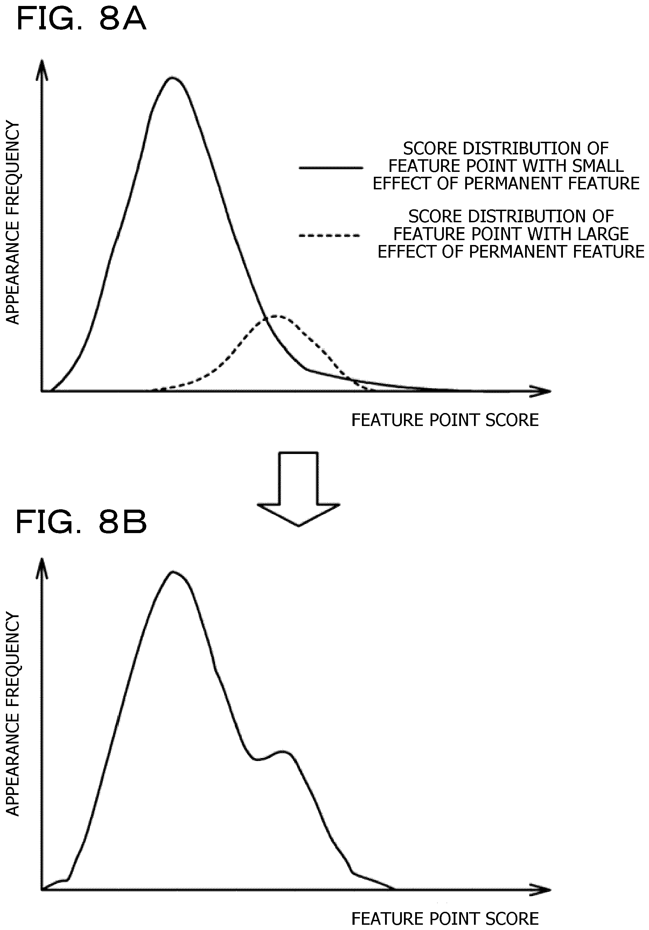

Next, a feature point score distribution of the another person pair will be described. As illustrated in FIG. 8A, a score distribution of a feature point with a small effect of the permanent feature is a distribution as in FIG. 6. The total number of the feature points with a large effect of the permanent feature is small. However, since the permanent feature is imaged in a similar manner each time when a biosensor acquires biometric information, a feature point score obtained by collating the feature points with the large effect of the permanent feature is larger than usual. According to the above, the feature point score of the another person pair has a frequency distribution as in FIG. 8B in total. In other words, an appearance frequency of the feature point score of the another person pair becomes higher in a region where the feature point score is relatively high.

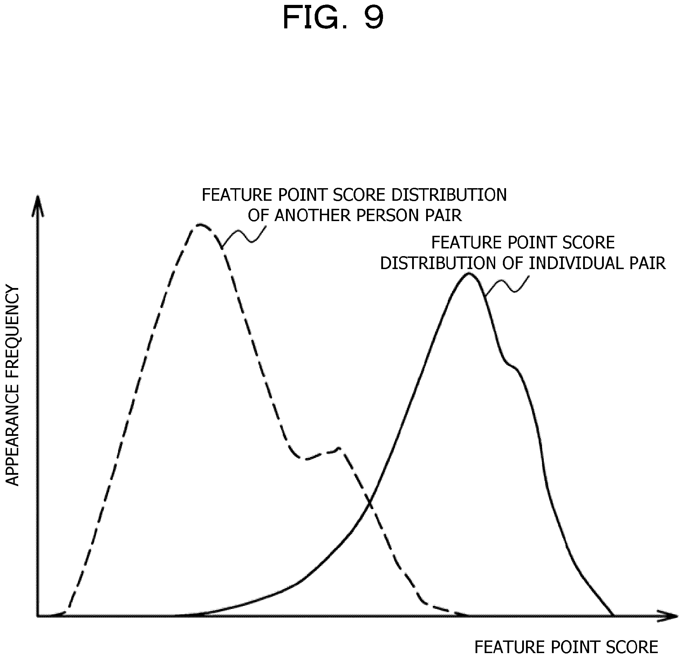

As illustrated in FIG. 9, due to the effect of the permanent feature, in a portion where the feature point score distribution of the individual pair overlaps the feature point score distribution of the another person pair, the appearance frequency of the feature point score of the another person pair is high. As a result, a difference between the feature point score distribution of the individual pair and the feature point score distribution of the another person pair is reduced, and a separation degree between the feature point score distribution of the individual pair and the feature point score distribution of the another person pair is lowered. Regarding the total collation score using the average of the plurality of feature point scores, a difference between the feature point score of the individual pair and the feature point score of the another person pair is reduced, and a separation degree between the individual pair and the another person pair is lowered. An error probability at which another person is erroneously determined as the person oneself increases, and the authentication accuracy deteriorates.

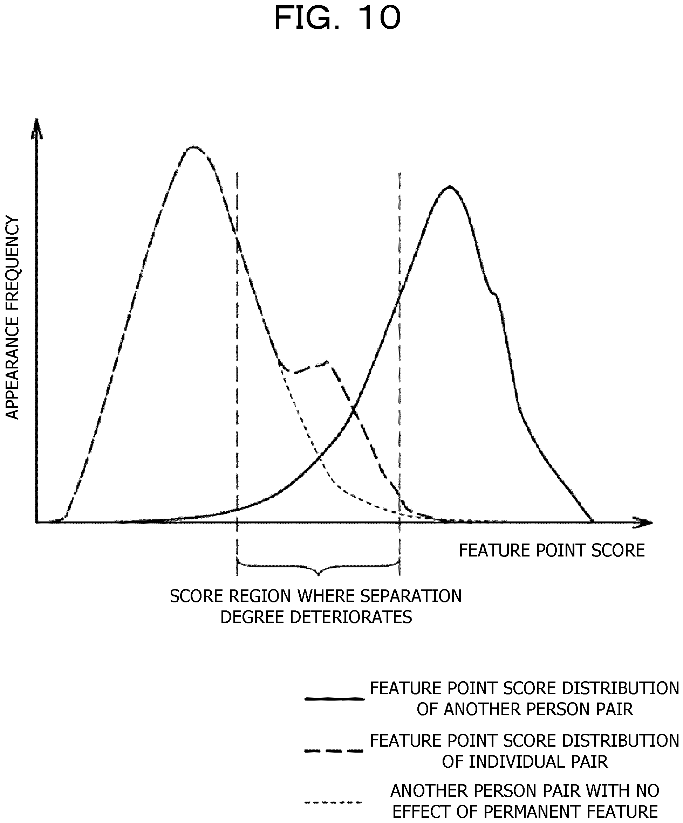

For characteristics of this score distribution, as illustrated in FIG. 10, a region where the feature point score distribution of the individual pair and the feature point score distribution of the another person pair overlap will be focused. Due to the effect of the permanent feature, a separation degree of a score region where the feature point score distribution of the individual pair and the feature point score distribution of the another person pair overlap deteriorates. Therefore, by adding a weight to the feature point score so as to compensate the separation degree according to a change rate of the score distribution caused by the effect of the permanent feature, the authentication accuracy is improved. In other words, a weighting coefficient is determined so that the feature point score distribution in a case where the effect of the permanent feature is large as illustrated in FIG. 9 approaches the feature point score distribution in a case where the effect of the permanent feature is small as illustrated in FIG. 6.

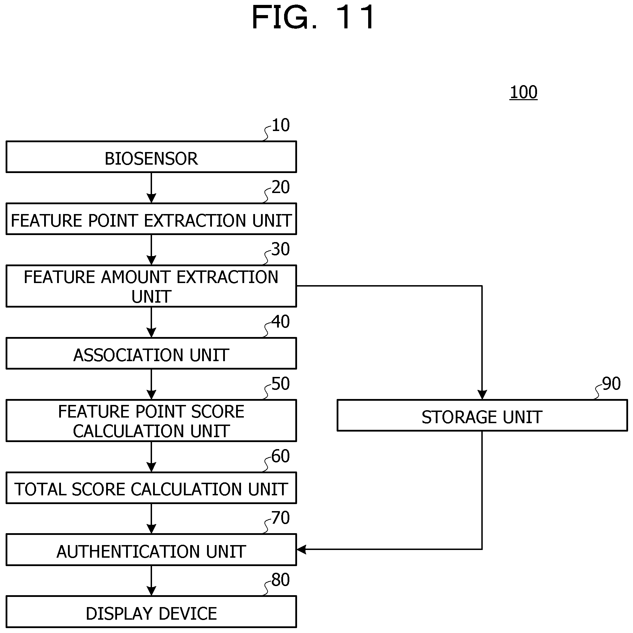

FIG. 11 is a block diagram illustrating an entire configuration of an information processing device 100 according to the present embodiment. As illustrated in FIG. 11, the information processing device 100 includes a biosensor 10, a feature point extraction unit 20, a feature amount extraction unit 30, an association unit 40, a feature point score calculation unit 50, a total score calculation unit 60, an authentication unit 70, a display device 80, a storage unit 90, or the like.

The biosensor 10 is an image sensor that can acquire a biometric image or the like. For example, in a case where the biosensor 10 is a fingerprint sensor, the biosensor 10 is an optical sensor that is arranged in contact with a reading surface, acquires fingerprints of one or more fingers, and acquires a fingerprint using light, a capacitance sensor that acquires a fingerprint using a difference in a capacitance, or the like. In a case where the biosensor 10 is a vein sensor, the biosensor 10 is a sensor that acquires palm veins in a non-contact manner, and for example, images veins under the skin of the palm using near infrared rays that are highly permeable to human bodies. The vein sensor includes, for example, a complementary metal oxide semiconductor (CMOS) camera or the like. Furthermore, a lighting that emits light including near infrared rays or the like may be provided. The display device 80 is a device that displays a result of each processing or the like by the information processing device 100 and is a liquid crystal display or the like.

(Biometric Registration Processing)

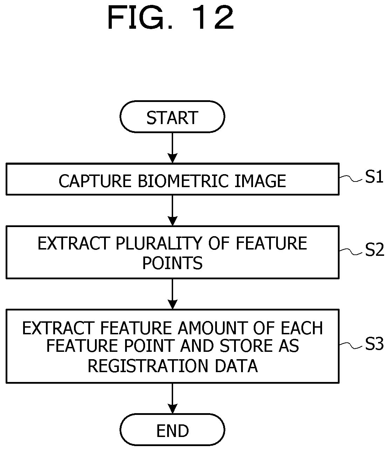

FIG. 12 is a flowchart illustrating an example of biometric registration processing. The biometric registration processing is processing executed when a user registers registration data in advance. As illustrated in FIG. 12, the biosensor 10 captures a biometric image (step S1). Next, the feature point extraction unit 20 extracts a plurality of feature points from the biometric image captured in step S1 (step S2). Next, the feature amount extraction unit 30 extracts a feature amount of each feature point extracted in step S2 and stores the feature amount in the storage unit 90 as the registration data (step S3). According to the above processing, the registration data can be registered in advance.

(Biometric Authentication Processing)

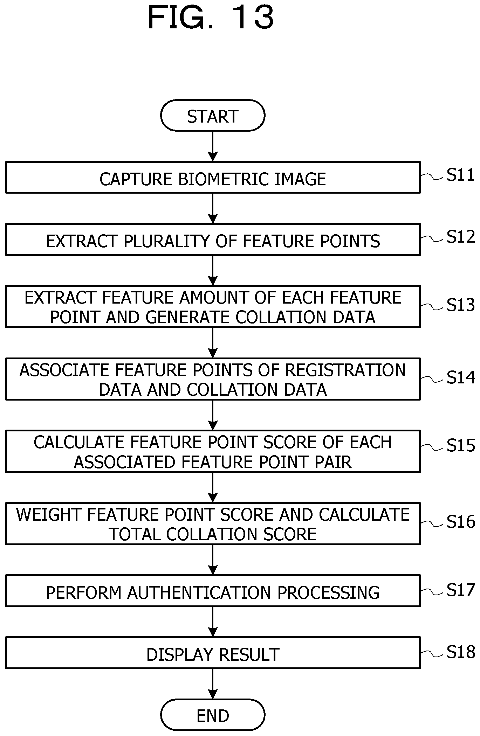

FIG. 13 is a flowchart illustrating an example of biometric authentication processing. The biometric authentication processing is processing executed in a scene where identity verification is required. As illustrated in FIG. 13, the biosensor 10 captures a biometric image (step S11). Next, the feature point extraction unit 20 extracts a plurality of feature points from the biometric image captured in step S11 (step S12). Next, the feature amount extraction unit 30 extracts a feature amount of each feature point extracted in step S12 and generates collation data (step S13).

Next, the association unit 40 associates each feature point of the registration data stored in the storage unit 90 with each feature point of the collation data (step S14). The association unit 40 may improve association accuracy by performing alignment by performing affine transformation on at least one of the collation data and the registration data. Next, the feature point score calculation unit 50 calculates a feature point score for each feature point pair associated in step S14 (step S15).

Next, the total score calculation unit 60 weights the feature point scores of all the feature point pairs with reference to a weighting coefficient stored in the storage unit 90 and calculates a total collation score (step S16). The total collation score can be expressed as in the following formula (2). In the following formula (2), N is the number of feature point pairs. The reference $s_i$ represents a feature point score of a feature point i ($1 \leq i \leq N$). The reference $w(s_i)$ represents a weighting coefficient to be applied to the feature point i ($0 \leq w(s_i) \leq 1$).

[Expression 2]

$$\text{Total collation score} = \frac{\sum_{i=1}^{N}\left(s_i \times w(s_i)\right)}{\sum_{i=1}^{N}\left(w(s_i)\right)}$$

In the total collation score, a weight changes according to a value of the feature point score. The weighting coefficient $w(s_i)$ is a weighting coefficient that is determined with respect to the value of the feature point score and reduces an effect of the feature point score with a large effect of the permanent feature. Therefore, in the present embodiment, in a range of the value of the feature point score with a small effect of the permanent feature, the weighting coefficient $w(s_i)$ is set to "1". In a range of the value of the feature point score with a large effect of the permanent feature, the weighting coefficient $w(s_i)$ is set to be a value smaller than "1".

Regarding what value of the weighting coefficient is applied to the feature point score, it is sufficient to experimentally evaluate the effect of the permanent feature in advance and determine a value that cancels the effect of the permanent feature. A mathematical formula for calculating a weighting coefficient is created using the feature point score as an input, and this mathematical formula may be used. The weighting coefficient may be derived from the feature point score with reference to a table.

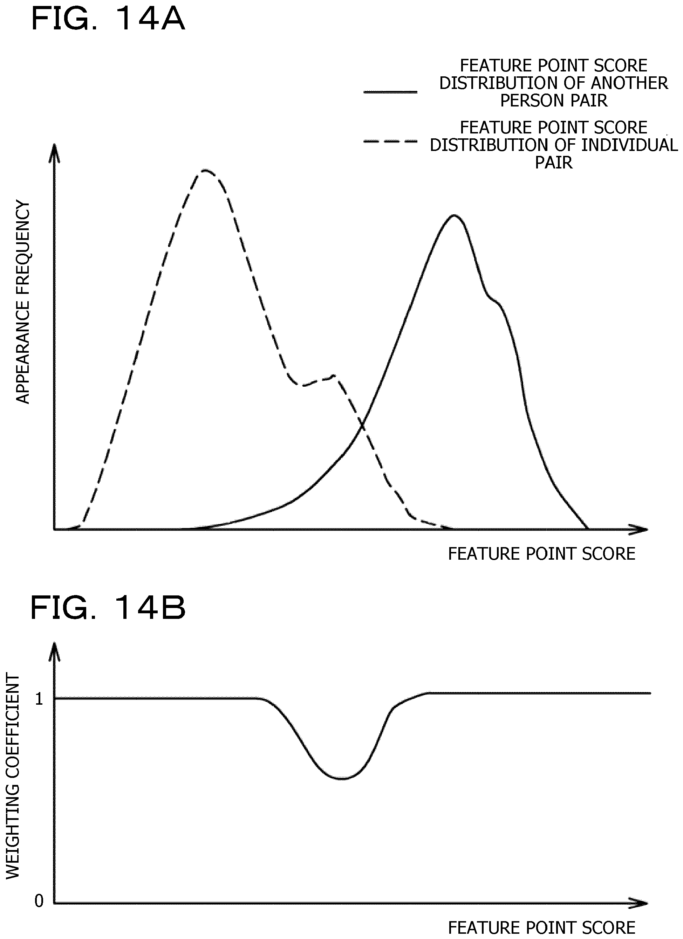

FIG. 14 (i.e., FIGs. 14A and 14B) is a diagram illustrating the weighting coefficient $w(s_i)$. As illustrated in FIG. 14, the weighting coefficient $w(s_i)$ is determined to be large in a case where the feature point score is small, to decrease as the feature point score increases, and to increase as the feature point score further increases. For example, the weighting coefficient $w(s_i)$ is "1" in a range where the feature point score is small, is smaller than "1" in a range of the value of the feature point score with a large effect of the permanent feature, and is also "1" in a range where the feature point score is large.

Next, the authentication unit 70 determines whether or not the total collation score is equal to or more than a threshold (step S17). The display device 80 displays a determination result in step S17 (step S18).

According to the present embodiment, the feature point score is calculated for each feature point pair associated between the collation data and the registration data, the weighting coefficient associated with the feature point score is applied to the feature point score, and the biometric authentication processing is executed based on a newly generated feature point score. Since the weighting coefficient that reduces the effect of the permanent feature is stored in the storage unit 90 in advance, processing for specifying the permanent feature at the time of the biometric authentication processing is omitted. As a result, it is possible to improve the authentication accuracy while suppressing the computational load.

Furthermore, according to the present embodiment, at the time of collation of the collation data with the registration data of the person oneself, a weight for a medium feature point score where the feature point score distribution of the individual pair and the feature point score distribution of the another person pair overlap is reduced, and the total collation score is lowered. However, since the appearance frequency at the medium feature point score becomes lower in a case where the collation between the collation data and the registration data of the person oneself is performed, a lowering degree of the total collation score is reduced even if the weight decreases. As a result, an effect on the authentication accuracy can be reduced.

An example of a procedure for determining a weighting coefficient will be described. (1) First, ideal data with no effect of the permanent feature is prepared. For example, in an ideal environment where the permanent feature does not enter, biometric information of a user is actually collected. Alternatively, biometric information that excludes the effect of the permanent feature manually or with artificial intelligence is artificially created. (2) Next, data having the effect of the permanent feature is collected in an actually operating environment or the like. (3) Next, by comparing appearance frequency distributions of the feature point scores in (1) and (2), the weighting coefficient is calculated.

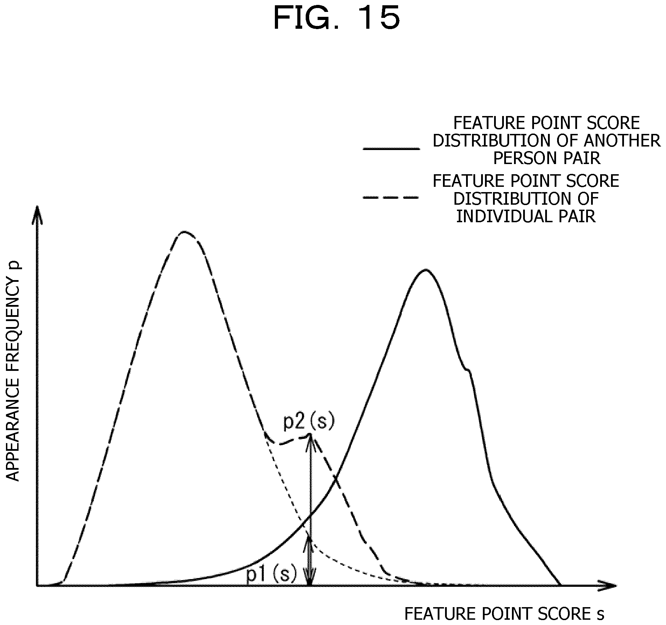

For example, as illustrated in FIG. 15, the appearance frequencies in (1) and (2) are acquired for each feature point score. The appearance frequency in (1) at a score s is assumed to be p1 (s), and the appearance frequency in (2) at the score s is assumed to be p2 (s). In this case, a weighting coefficient w (s) at the score s can be represented as p1 (s) jp2 (s).

Coordinates of a feature point may be reflected in determination of the weighting coefficient. For example, in a case where positions (coordinates in biometric image) where the permanent features are generated are biased toward specific coordinates, the coordinates of the feature point are added as parameters for the calculation of the weighting coefficient. The feature point coordinates are normalized to standard coordinates that do not depend on a situation where a biometric image is captured, so that the coordinates can be compared even if the biometric images are different. For example, a case or the like is assumed where a wrinkle or the like constantly appears at the same position. A calculation formula of the total collation score at this time is as indicated in the following formula (3). In the following formula (3), N is the number of feature points. The reference $s_i$ represents a feature point score of the feature point i. The coordinates $(x_i, y_i)$ are coordinates of the feature point i. The reference $w(s_i, x_i, y_i)$ represents a weight to be applied to the feature point i ($0 \leq w(s_i, x_i, y_i) \leq 1$).

[Expression 3]

Total collation score

$$= \frac{\sum_{i=1}^{N} \left( s_i \times w(s_i, x_i, y_i) \right)}{\sum_{i=1}^{N} \left( w(s_i, x_i, y_i) \right)}$$

Moreover, in a case where an effect probability of the permanent feature depends on coordinates and can be expressed as p (x, y) and a weight relationship according to the feature point score does not depend on coordinates, depends on only the feature point score, and can be expressed as w_0 (s), a calculation formula of the weighting coefficient w can be represented as in the following formula (4). The total collation score can be represented as in the following formula (5).

[Expression 4]

$$w(s_i, x_i, y_i) = w_0(s_i) \times p(x_i, y_i)$$

[Expression 5]

Total collation score

$$= \frac{\sum_{i=1}^{N} \left( s_i \times w_0(s_i) \times p(x_i, y_i) \right)}{\sum_{i=1}^{N} \left( w_0(s_i) \times p(x_i, y_i) \right)}$$

(Hardware Configuration)

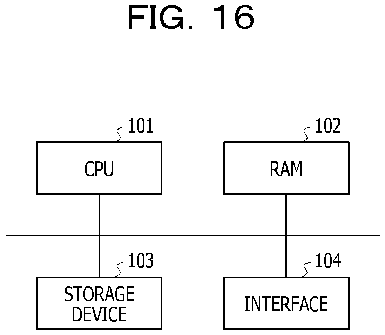

FIG. 16 is a block diagram illustrating a hardware configuration of the feature point extraction unit 20, the feature amount extraction unit 30, the association unit 40, the feature point score calculation unit 50, the total score calculation unit 60, the authentication unit 70, and the storage unit 90 of the information processing device 100. As illustrated in FIG. 16, the information processing device 100 includes a central processing unit (CPU) 101, a random access memory (RAM) 102, a storage device 103, an interface 104, or the like.

The central processing unit (CPU) 101 serves as a central processing unit. The CPU 101 includes one or more cores. The random access memory (RAM) 102 is a volatile memory that temporarily stores a program to be executed by the CPU 101, data to be processed by the CPU 101, and the like. The storage device 103 is a nonvolatile storage device. For example, a read only memory (ROM), a solid state drive (SSD) such as a flash memory, a hard disk to be driven by a hard disk drive, or the like may be used as the storage device 103. The storage device 103 stores an authentication program. The interface 104 is an interface device with an external device. By executing the authentication program by the CPU 101, the feature point extraction unit 20, the feature amount extraction unit 30, the association unit 40, the feature point score calculation unit 50, the total score calculation unit 60, the authentication unit 70, and the storage unit 90 of the information processing device 100 are implemented. Note that hardware such as a dedicated circuit may be used as the feature point extraction unit 20, the feature amount extraction unit 30, the association unit 40, the feature point score calculation unit 50, the total score calculation unit 60, the authentication unit 70, and the storage unit 90.

In the above example, after registration data to be collated is specified by inputting an ID or the like, the collation data may be collated with the registration data (1:1 authentication). Alternatively, the collation data and all the pieces of the registration data may be collated without specifying the registration data to be collated (1:N authentication). In a case of the 1:N authentication, if the highest collation degree is equal to or more than a threshold, a user to be collated coincides with a user of the registration data, and the collation is successful.

In the above example, the feature amount extraction unit 30 is an example of an extraction unit that extracts a feature amount of each of a plurality of feature points of a living body from imaged data of the living body. The feature point score calculation unit 50 is an example of a calculation unit that calculates a similarity between the feature amount of each of the plurality of feature points extracted by the extraction unit and a feature amount stored in a storage unit in association with a feature point corresponding to each of the plurality of feature points. The total score calculation unit 60 and the authentication unit 70 are examples of an authentication processing unit that refers to the storage unit that stores weight information indicating a weight to be applied to a similarity in association with the similarity, acquires the weight information associated with the calculated similarity, and executes authentication processing on the living body based on a similarity that is newly generated by applying the acquired weight information to the similarity calculated by the calculation unit. The storage unit 90 is an example of a storage unit. The feature point score distribution in FIG. 6 is an example of a first frequency distribution of the similarity obtained by collation using imaged data acquired in a state where an effect of a feature, which exists in common between a person oneself and another person, is small. The feature point score distribution in FIG. 9 is an example of a second frequency distribution of the similarity obtained by collation using imaged data acquired in a state where the effect of the feature, which exists in common between the person oneself and the another person, is large.

While the embodiment of the present invention has been described above in detail, the present invention is not limited to such a specific embodiment, and various modifications and alterations may be made within the scope of the present invention described in the claims.

CITATION LIST

PATENT DOCUMENT

Patent Document 1: Japanese Laid-open Patent Publication No. 2015-129997

REFERENCE SIGNS LIST

10 biosensor
20 feature point extraction unit
30 feature amount extraction unit
40 association unit
50 feature point score calculation unit
60 total score calculation unit
70 authentication unit
80 display device

90 storage unit
100 information processing device

**Claims**

1. An authentication method implemented by a computer, the authentication method comprising:

   extracting a feature amount of each of a plurality of feature points of a living body from imaged data of the living body;
   calculating a similarity between the feature amount of each of the plurality of feature points and a feature amount stored in a storage unit in association with a feature point that corresponds to each of the plurality of feature points;
   referring to the storage unit that stores weight information that indicates a weight to be applied to a similarity in association with the similarity to acquire the weight information associated with the calculated similarity; and
   executing authentication processing on the living body based on a similarity that is newly generated by applying the acquired weight information to the calculated similarity.

2. The authentication method according to claim 1, wherein
   the weighting coefficient is a value determined, by comparing a first frequency distribution of the similarity obtained by collation by using imaged data acquired in a state where an effect of a feature that exists in common between a person oneself and another person is small with a second frequency distribution of the similarity obtained by collation by using imaged data acquired in a state where the effect of the feature that exists in common regardless of the person is the person oneself or the another person is large when biometric information is acquired with a biosensor, so that the second frequency distribution approaches the first frequency distribution.

3. The authentication method according to claim 1 or 2, wherein

   the feature that exists in common between the person oneself and the another person is a line of a palm, and the feature point is a feature point of a palm vein pattern.

4. The authentication method according to any one of claims 1 to 3, the authentication method further comprising:
   using normalized coordinates, in a captured image, of the feature point of which the similarity is calculated, together with a value of the similarity, to change a value of a weighting coefficient according to the normalized coordinates.

5. The authentication method according to any one of claims 1 to 4, wherein
   the weighting coefficient is determined to be large in a case where the similarity of a plurality of feature points is small, to decrease as the similarity increases, and to increase as the similarity further increases.

6. An information processing device comprising:

   an extraction unit configured to extract a feature amount of each of a plurality of feature points of a living body from imaged data of the living body;
   a calculation unit configured to calculate a similarity between the feature amount of each of the plurality of feature points extracted by the extraction unit and a feature amount stored in a storage unit in association with a feature point that corresponds to each of the plurality of feature points; and
   an authentication processing unit configured to

   refer to the storage unit that stores weight information that indicates a weight to be applied to a similarity in association with the similarity to acquire the weight information associated with the calculated similarity, and
   execute authentication processing on the living body based on a similarity that is newly generated by applying the acquired weight information to the similarity calculated by the calculation unit.

7. The information processing device according to claim 6, wherein the weighting coefficient is a value determined, by comparing a first frequency distribution of the similarity obtained by collation by using imaged data acquired in a state where an effect of a feature that exists in common between a person oneself and another person is small with a second frequency distribution of the similarity obtained by collation by using imaged data acquired in a state where the effect of the feature that exists in common regardless of the person is the person oneself or the another person is large when biometric information is acquired with a biosensor, so that the second frequency distribution approaches the first frequency distribution.

8. The information processing device according to claim 6 or 7, wherein

   the feature that exists in common between the person oneself and the another person is a line of a palm, and the feature point is a feature point of a palm vein pattern.

9. The information processing device according to any one of claims 6 to 8, wherein the authentication processing unit uses normalized coordinates, in a captured image, of the feature point of which the similarity is calculated, together with a value of the similarity and changes a value of a weighting coefficient according to the normalized coordinates.

10. The information processing device according to any one of claims 6 to 9, wherein
    the weighting coefficient is determined to be large in a case where the similarity of a plurality of feature points is small, to decrease as the similarity increases, and to increase as the similarity further increases.

11. An authentication program comprising instructions which, when executed by a computer, cause the computer to perform processing, the processing comprising:

    extracting a feature amount of each of a plurality of feature points of a living body from imaged data of the living body;
    calculating a similarity between the feature amount of each of the plurality of feature points and a feature amount stored in a storage unit in association with a feature point that corresponds to each of the plurality of feature points;
    referring to the storage unit that stores weight information that indicates a weight to be applied to a similarity in association with the similarity to acquire the weight information associated with the calculated similarity; and
    executing authentication processing on the living body based on a similarity that is newly generated by applying the acquired weight information to the calculated similarity.

12. The authentication program according to claim 11, wherein
    the weighting coefficient is a value determined, by comparing a first frequency distribution of the similarity obtained by collation by using imaged data acquired in a state where an effect of a feature that exists in common between a person oneself and another person is small with a second frequency distribution of the similarity obtained by collation by using imaged data acquired in a state where the effect of the feature that exists in common regardless of the person is the person oneself or the another person is large when biometric information is acquired with a biosensor, so that the second frequency distribution approaches the first frequency distribution.

13. The authentication program according to claim 11 or 12, wherein the feature that exists in common between the person oneself and the another person is a line of a palm, and
    the feature point is a feature point of a palm vein pattern.

14. The authentication program according to any one of claims 11 to 13, the processing further comprising:
    using normalized coordinates, in a captured image, of the feature point of which the similarity is calculated, together with a value of the similarity, to change a value of a weighting coefficient according to the normalized coordinates.

15. The authentication program according to any one of claims 11 to 14, wherein
    the weighting coefficient is determined to be large in a case where the similarity of a plurality of feature points is small, to decrease as the similarity increases, and to increase as the similarity further increases.

# FIG. 1

REGISTRATION DATA COLLATION DATA

FEATURE POINT SCORE $s_1$

FEATURE POINT SCORE $s_2$

FEATURE POINT SCORE $s_3$

FEATURE POINT SCORE $s_4$

FEATURE POINT SCORE $s_5$

FEATURE POINT SCORE $s_6$

# FIG. 2

PERSON ONESELF

ANOTHER PERSON

WRINKLE

WRINKLE

# FIG. 3

PERSON ONESELF

ANOTHER PERSON

SCRATCH

SCRATCH

# FIG. 4

PERSON ONESELF

ANOTHER PERSON

BRIGHT PORTION

BRIGHT PORTION

# FIG. 5

PERSON ONESELF

LINES OF PALM

ANOTHER PERSON

LINES OF PALM

# FIG. 6

## FIG. 7A

APPEARANCE FREQUENCY

FEATURE POINT SCORE

SCORE DISTRIBUTION OF FEATURE POINT WITH SMALL EFFECT OF PERMANENT FEATURE

SCORE DISTRIBUTION OF FEATURE POINT WITH LARGE EFFECT OF PERMANENT FEATURE

## FIG. 7B

APPEARANCE FREQUENCY

FEATURE POINT SCORE

# FIG. 8A

SCORE DISTRIBUTION OF
FEATURE POINT WITH SMALL
EFFECT OF PERMANENT FEATURE

SCORE DISTRIBUTION OF
FEATURE POINT WITH LARGE
EFFECT OF PERMANENT FEATURE

# FIG. 8B

# FIG. 9

FEATURE POINT SCORE DISTRIBUTION
OF ANOTHER PERSON PAIR

FEATURE POINT SCORE
DISTRIBUTION OF INDIVIDUAL PAIR

APPEARANCE FREQUENCY

FEATURE POINT SCORE

# FIG. 10

SCORE REGION WHERE SEPARATION
DEGREE DETERIORATES

——— FEATURE POINT SCORE DISTRIBUTION
OF ANOTHER PERSON PAIR

— — — FEATURE POINT SCORE DISTRIBUTION
OF INDIVIDUAL PAIR

------- ANOTHER PERSON PAIR WITH NO
EFFECT OF PERMANENT FEATURE

# FIG. 11

100

```
┌─────────────────────────────────┐ 10
│            BIOSENSOR            │
└─────────────────────────────────┘
                │
                ▼
┌─────────────────────────────────┐ 20
│   FEATURE POINT EXTRACTION UNIT  │
└─────────────────────────────────┘
                │
                ▼
┌─────────────────────────────────┐ 30
│   FEATURE AMOUNT EXTRACTION      │
│            UNIT                  │
└─────────────────────────────────┘
                │
                ▼
┌─────────────────────────────────┐ 40
│        ASSOCIATION UNIT          │
└─────────────────────────────────┘
                │
                ▼
┌─────────────────────────────────┐ 50
│      FEATURE POINT SCORE         │
│       CALCULATION UNIT           │
└─────────────────────────────────┘
                │
                ▼
┌─────────────────────────────────┐ 60
│  TOTAL SCORE CALCULATION UNIT    │
└─────────────────────────────────┘
                │
                ▼
┌─────────────────────────────────┐ 70
│      AUTHENTICATION UNIT         │
└─────────────────────────────────┘
                │
                ▼
┌─────────────────────────────────┐ 80
│        DISPLAY DEVICE            │
└─────────────────────────────────┘
```

90
STORAGE UNIT

# FIG. 12

```
        ( START )
            |
            v
+---------------------------+
|  CAPTURE BIOMETRIC IMAGE  |----- S1
+---------------------------+
            |
            v
+---------------------------+
|  EXTRACT PLURALITY OF     |
|  FEATURE POINTS           |----- S2
+---------------------------+
            |
            v
+---------------------------+
|  EXTRACT FEATURE AMOUNT   |
|  OF EACH FEATURE POINT    |
|  AND STORE AS             |----- S3
|  REGISTRATION DATA        |
+---------------------------+
            |
            v
        (  END  )
```

# FIG. 13

```
          ┌─────────────┐
          │    START    │
          └──────┬──────┘
                 ↓
   ┌──────────────────────────────────┐
   │    CAPTURE BIOMETRIC IMAGE        │──S11
   └──────────────┬───────────────────┘
                  ↓
   ┌──────────────────────────────────┐
   │  EXTRACT PLURALITY OF FEATURE POINTS │──S12
   └──────────────┬───────────────────┘
                  ↓
   ┌──────────────────────────────────┐
   │ EXTRACT FEATURE AMOUNT OF EACH FEATURE │──S13
   │ POINT AND GENERATE COLLATION DATA │
   └──────────────┬───────────────────┘
                  ↓
   ┌──────────────────────────────────┐
   │ ASSOCIATE FEATURE POINTS OF REGISTRATION │──S14
   │   DATA AND COLLATION DATA         │
   └──────────────┬───────────────────┘
                  ↓
   ┌──────────────────────────────────┐
   │ CALCULATE FEATURE POINT SCORE OF EACH │──S15
   │  ASSOCIATED FEATURE POINT PAIR    │
   └──────────────┬───────────────────┘
                  ↓
   ┌──────────────────────────────────┐
   │ WEIGHT FEATURE POINT SCORE AND CALCULATE │──S16
   │    TOTAL COLLATION SCORE          │
   └──────────────┬───────────────────┘
                  ↓
   ┌──────────────────────────────────┐
   │  PERFORM AUTHENTICATION PROCESSING │──S17
   └──────────────┬───────────────────┘
                  ↓
   ┌──────────────────────────────────┐
   │        DISPLAY RESULT             │──S18
   └──────────────┬───────────────────┘
                  ↓
          ┌─────────────┐
          │     END     │
          └─────────────┘
```

# FIG. 14A

FEATURE POINT SCORE
DISTRIBUTION OF ANOTHER
PERSON PAIR

FEATURE POINT SCORE
DISTRIBUTION OF INDIVIDUAL
PAIR

APPEARANCE FREQUENCY

FEATURE POINT SCORE

# FIG. 14B

WEIGHTING COEFFICIENT

1

0

FEATURE POINT SCORE

# FIG. 15

FEATURE POINT SCORE DISTRIBUTION OF ANOTHER PERSON PAIR

FEATURE POINT SCORE DISTRIBUTION OF INDIVIDUAL PAIR

APPEARANCE FREQUENCY p

$p2(s)$

$p1(s)$

FEATURE POINT SCORE s

# FIG. 16

| 101 | 102 |
|-----|-----|
| CPU | RAM |

| 103 | 104 |
|-----|-----|
| STORAGE DEVICE | INTERFACE |

## INTERNATIONAL SEARCH REPORT

International application No.

PCT/JP2020/023056

### A. CLASSIFICATION OF SUBJECT MATTER
Int. Cl. G06T7/00(2017.01)i
FI: G06T7/00 510Z

According to International Patent Classification (IPC) or to both national classification and IPC

### B. FIELDS SEARCHED

Minimum documentation searched (classification system followed by classification symbols)
Int. Cl. G06T7/00

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-28532 A (FUJITSU LTD.) 21 February 2019, paragraphs [0016]-[0055], fig. 1-10, paragraphs | 1, 3-4, 6, 8-9, 11, 13-14 |
| A | [0016]-[0055], fig. 1-10 | 2, 5, 7, 10, 12, 15 |
| A | WO 2011/061862 A1 (HITACHI, LTD.) 26 May 2011, entire text, all drawings | 1-15 |
| A | JP 7-220075 A (SHARP CORP.) 18 August 1995, entire text, all drawings | 1-15 |
| A | JP 2020-501264 A (VERIDIUM IP LTD.) 16 January 2020, entire text, all drawings | 1-15 |

☐ Further documents are listed in the continuation of Box C.   ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>28.08.2020 | Date of mailing of the international search report<br>08.09.2020 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT

Information on patent family members

International application No.

PCT/JP2020/023056

| Patent Documents referred to in the Report | Publication Date | Patent Family | Publication Date |
|---|---|---|---|
| JP 2019-28532 A | 21.02.2019 | (Family: none) | |
| WO 2011/061862 A1 | 26.05.2011 | US 2012/0230555 A1 entire text, all drawings EP 2503509 A1 CN 102598052 A | |
| JP 7-220075 A | 18.08.1995 | (Family: none) | |
| JP 2020-501264 A | 16.01.2020 | US 2018/0018501 A1 entire text, all drawings | |

Form PCT/ISA/210 (patent family annex) (January 2015)

**EP 4 167 179 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015129997 A